(19) **Europäisches Patentamt / European Patent Office / Office européen des brevets**

(11) **EP 4 636 026 A1**

(12) **EUROPEAN PATENT APPLICATION**

(43) Date of publication:
22.10.2025 Bulletin 2025/43

(21) Application number: 24171421.1

(22) Date of filing: 19.04.2024

(51) International Patent Classification (IPC):
*C08L 23/12* (2006.01)  *C08L 23/14* (2006.01)
*C08L 23/10* (2006.01)

(52) Cooperative Patent Classification (CPC):
(C-Sets available)
**C08L 23/10;** C08L 2205/035; C08L 2207/02;
C08L 2207/20          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Basell Poliolefine Italia S.r.l.
20121 Milano (IT)**

(72) Inventors:
• **HEES, Timo
65926 Frankfurt/M. (DE)**
• **CAVALIERI, Claudio
44122 Ferrara (IT)**

(74) Representative: **LyondellBasell
c/o Basell Poliolefine Italia
Intellectual Property
P.le Donegani 12
44122 Ferrara (IT)**

(54) **POLYOLEFIN COMPOSITIONS OBTAINED FROM RECYCLED POLYOLEFINS**

(57)     The a recycled polyolefin composition comprising:
A) from 40 wt% to 65 wt% of a recycled polypropylene composition;
B) from 20 wt% to 40 wt% of a polypropylene homopolymer ;
C) from 14 wt% to 28 wt%; of a second polypropylene ethylene copolymer the sum of the amounts of (A), (B) and (C) being referred to the total weight of (A), (B) and (C) is 100;

EP 4 636 026 A1

(52) Cooperative Patent Classification (CPC): (Cont.)

C-Sets
**C08L 23/10, C08L 23/12, C08L 23/12, C08L 23/16**

**Description**

FIELD OF THE INVENTION

The present disclosure relates to polypropylene compositions containing recycled elastomeric material that can be used for the preparation of blow moulded articles.

BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow moulded bottles and injection moulded containers. Usually, through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

However, the multicomponent nature of the recycled material often results in low mechanical and optical performances of the polyolefin formulations in which part of the virgin polymer is replaced by recycled polymer.

In an effort to mitigate the mechanical properties deterioration the use of compatibilizer ingredients has been proposed in the art. US5,030,662 for example discloses the use of compatibilizer of the type that reacts with the polymer matrix under heat and shearing conditions either by free radical or ionic mechanism. Examples of compatibilizers according to this document are olefin copolymers with polar monomers such as maleic anhydride or vinyl acetate.

WO2007/071494 discloses the use of a a heterophasic polyolefin composition having flexural modulus equal to or lower than 600 MPa as a compatibilizer agent for a recycled polyolefin composition.

It has now unexpectedly been found that certain specific formulations of recycled material although be based on multiplicity of chemically different components when mixed with virgin polymers generate polyolefin compositions combining good mechanical properties profile with an optimum balance of impact properties and tensile modulus.

SUMMARY OF THE INVENTION

It is therefore an object of the present disclosure a recycled polyolefin composition comprising:

A) from 40 wt% to 65 wt%; preferably from 42 wt% to 60 wt%; more preferably from 45 wt% to 58 wt%; of a recycled polypropylene composition;

B) from 20 wt% to 40 wt%; preferably from 22 wt% to 38 wt%; more preferably from 25 wt% to 35 wt%; of a propylene homopolymer , having:

- a fraction soluble in xylene at 25°C lower than 4.0 wt%; preferably lower than 3.0 wt%; more preferably lower than 2.5 wt%;
- a Melt Flow Rate (ISO 1133 230°C/5.0 kg) ranging from 0.1 to 3.3 g/10min; preferably ranging from 0.3 to 2.9 g/10min; more preferably ranging from 0.5 to 2.6 g/10min;

  - Tensile modulus, measured according to ISO 527-2, ranging from 1100N/mm$^2$ to 1900 N/mm$^2$; preferably ranging from 1200 N/mm$^2$ to 1780 N/mm$^2$; more preferably ranging from 1300 N/mm$^2$ to 1660 N/mm$^2$;
  - Charpy impact test at 23°C, determined according to ISO 179-1eA, and ISO 1873-2, ranging from 5.2 KJ/m$^2$ to 25.0 KJ/m$^2$; preferably ranging from 8.1 KJ/m$^2$ to 22.2 KJ/m$^2$; more preferably ranging from 10.4 KJ/m$^2$ to 18.3 KJ/m$^2$

- Elongation at break: measured according to ISO 527 ranging from 350 % to 860%; preferably ranging from 430 % to 710 %; more preferably ranging from 490 % to 630 %

C) from 14 wt% to 28 wt%; preferably from 15 wt% to 26 wt%; more preferably from 16 wt% to 24 wt%; of a second polypropylene ethylene copolymer comprising:

- (c1) from 21 wt% to 43 wt%, preferably from 23 wt% to 41 wt%; more preferably from 27 wt% to 37 wt% of a propylene ethylene copolymer, having:

- units derived from ethylene, measured according to $^{13}$C-NMR, in an amount ranging from 1.7 wt% to 4.5 wt%; preferably from 2.0 wt% to 4.3 wt%; more preferably ranging from 2.6 wt% to 3.7 wt%;
- a fraction soluble in xylene at 25°C lower than 8.0 wt%; preferably lower than 7.5 wt%; more preferably lower than 7.0 wt%; even more preferably lower than 6.5 wt%; preferably being higher than 0.5 wt% and
- a Melt Flow Rate (ISO 1133 230°C/5.0 kg) ranging from 18.0 to 34.0 g/10min; preferably ranging from 20.0 to 32.5 g/10min; more preferably ranging from 22.0 to 30.1 g/10min;

  - (c2) from 57 wt% to 79 wt%; preferably from 59 wt% to 77 wt%; more preferably from 63 wt% to 73 wt% of a copolymer of propylene and ethylene having:

    - units derived from ethylene, measured according to $^{13}$C-NMR, in an amount ranging from 18.0 wt% to 36.0 wt%; preferably from 20.2 wt% to 34.4 wt%; more preferably ranging from 22.8 wt% to 32.3 wt%;

said polypropylene copolymer (C) being further characterized by:

- a Melt Flow Rate (ISO 1133 230°C/5.0 kg) ranging from 0.2 to 1.7 g/10 min; preferably from 0.3 to 1.4 g/10min; more preferably ranging from 0.4 to 1.2 g/10min;
- an amount of fraction soluble in xylene at 25°C ranging from 52.0 wt% to 76.0 wt%; preferably from 54.0 wt% to 74.0 wt% ; more preferably from 56.0 wt% to 72.0 wt%;
- intrinsic viscosity fraction soluble in xylene at 25°C, measured in tetrahydronaphthalene at 135 °C, ranging from 2.1 to 4.7 dl/g; preferably from 2.4 to 4.3 dl/g; more preferably ranging from 2.7 to 3.9 dl/g; and,

  in the said composition the sum of c1) and c2), being referred to the total weight of c1) and c2), is 100,
  the sum of the amounts of (A), (B) and (C) being referred to the total weight of (A), (B) and (C) is 100;

the recycled polypropylene composition **(A)** has:

Ethylene derived units content, measured with $^{13}$C-NMR, ranging from 2.50 wt% to 7.30 wt%;
Butene derived units content, measured with $^{13}$C-NMR, ranging from 0.05 wt% to 0.30 wt%;
Hexene derived units content, measured with $^{13}$C-NMR, ranging from 0.03 wt% to 0.23 wt%;
Octene derived units content, measured with $^{13}$C-NMR, ranging from 0.02 wt% to 0.50 wt%;
Polyethylene terephthalate content, measured with $^{13}$C-NMR, ranging from 0.05 wt% to 0.8 wt%
Propylene derived units content, measured with $^{13}$C-NMR, higher than 87.4 wt%
Density, ISO 1183-1, ranging from 0.9400 $Kg/dm^3$ to 0.9500 $Kg/dm^3$; preferably ranging from 0.9423 $Kg/dm^3$ to 0.9484 $Kg/dm^3$; more preferably ranging from 0.9448 $Kg/dm^3$ to 0.9476 $Kg/dm^3$;
Melt Flow Rate (ISO 1133 230°C/2.16 kg) ranging from 1.2 to 20.3 g/10min; preferably ranging from 3.4 to 17.4 g/10min; more preferably ranging from 5.2 to 12.3 g/10min.

DETAILED DESCRIPTION OF THE INVENTION

Preferably the recycled polypropylene composition (A) has:

Tensile modulus, measured according to ISO 527-2, ranging from 1060N/$mm^2$ to 1900 N/$mm^2$;
preferably ranging from 1260 N/$mm^2$ to 1780 N/$mm^2$; more preferably ranging from 1350 N/$mm^2$ to 1760 N/$mm^2$.

Preferably the recycled polypropylene composition (A) has:
Charpy impact test at 23°C, determined according to ISO 179-1eA, and ISO 1873-2, ranging from 2.2 KJ/$m^2$ to 9.0 KJ/$m^2$; preferably ranging from 3.1 KJ/$m^2$ to 8.2 KJ/$m^2$; more preferably ranging from 3.4 KJ/$m^2$ to 7.3 KJ/$m^2$.
The term "copolymer" as used herein refers to polymers with two different recurring units.
The term "recycled" is used to designate polymer materials deriving from at least one cycle of processing into manufactured articles, as opposed to virgin polymers that is a polymer not subjected at least one cycle of processing into manufactured articles.
The term "consisting essentially of', as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A), (B) and (C) and any preferred range of features of components (A), (B) and (C) can be combined with any preferred range of one or more of the features of components (A) to (B) and with any possible additional component, and its features, described in the present disclosure.

Components B) and C) can be prepared by polymerizing propylene, optionally in mixture with ethylene in the presence of a catalyst comprising the product of the reaction between:

i) a solid catalyst component comprising Ti, Mg, Cl, and at least an internal electron donor compound;
ii) an alkylaluminum compound and,
iii) an external electron-donor compound; preferably the external donor compound has the general formula: $(R^7)_a(R^8)_b Si(OR^9)_c$, where a and b are integers from 0 to 2, c is an integer from 1 to 4 and the sum (a+b+c) is 4; $R^7$, $R^8$, and $R^9$, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold $TiCl_4$; the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R7 and R8 is selected from branched alkyl, cycloalkyl or aryl groups with 3-10 carbon atoms optionally containing heteroatoms and $R^9$ is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Component C) can be prepared in a continuous sequential polymerization process, wherein component c1) is prepared in the first reactor and component c2) is prepared in the second reactor in the presence of component c1) according to the known techniques and operating in gas phase, or in liquid phase in the presence or not of inert diluent, or by mixed liquid-gas techniques.

Component B) being a propylene homopolymer can be prepared in a continuous sequential polymerization process according to the known techniques and operating in gas phase, or in liquid phase in the presence or not of inert diluent, or by mixed liquid-gas techniques.

Component B) is preferably a commercial polymer grade such as Moplen EP440G sold by Lyondellbasell.

Component C) is preferably a commercial polymer grade such as Moplen HP556E Q100F sold by Lyondellbasell.

Component (A) can be a Post-Industrial Resin (PIR) or a Post-Consumer Resin (PCR).

Post-Industrial Resin (PIR) is the waste generated from the manufacturing process that is reclaimed or used again in the same material.

Post-Consumer Resin (PCR) defined as recyclate derived from an end product that has completed its life cycle as a consumer item and would otherwise be disposed of as waste.

If needed, the final composition comprising (A)+(B) can be subject to a chemical treatment with organic peroxides in order to lower the average molecular weight and increase the melt flow index up to the value needed for the specific application.

Preferably the tensile modulus of the whole recycled polyolefin composition ranges from to 740 MPa to 1640 MPa more preferably from 840 to 1440 MPa; even more preferably from 950 to 1390 MPa .

The value of Charpy impact at 23°C preferably ranges from 30.0 KJ/m$^2$ to 60.0 KJ /m$^2$; more preferably it ranges from 35.0 KJ /m$^2$ to 55.1 KJ / m$^2$; even more preferably it ranges from 40.5 KJ /m$^2$ to 50.6 KJ /m$^2$.

The whole propylene composition of the present disclosure can be obtained by mechanical blending of the components (A) (B) and (C) according to conventional techniques.

The final composition comprising the components (A) (B) and (C) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 wt% to 2 wt%, more preferably from 0.1 wt% to 1 wt%, with respect to the total weight, for example.

The propylene polymer composition of the present disclosure can be for the production of blow molded articles such as bottle and containers.

The following examples are given in order to illustrate, but not limit the present disclosure.

## EXAMPLES

## CHARACTERIZATIONS

## Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%).

## Melt Flow Rate (MFR)

Measured according to ISO 1133-1 at 230 °C with a load of 2.16 kg or 5 kg, as specified.

## Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I. = 105/Gc$$

in which Gc is the crossover modulus which is defined as the value (expressed in Pa) at which G'=G" wherein G' is the storage modulus and G' is the loss modulus.

**Evaluation of 13C NMR spectrum of Ethylene, Propylene, 1-Butene, 1-Hexene and 1-Octene copolymers**

In the $^{13}$C NMR spectrum only the signals from Ethylene, Propylene, 1-Butene, 1-Hexene and 1-Octene copolymers were considered (assignments of peak relevant for quantification are reported in Table 1). Triad distribution (considering only EBE, EHE and EOE due to the low amount of these comonomers) was obtained from the integration of relevant peaks in $^{13}$C NMR spectrum (possible overlaps of the peaks of the antioxidant AO1010 were taken into account), using the following relations:

$$PPP = 100\, I_{11}/\Sigma$$

for

$$I_3/I_4 < 1: PPE = 100\, I_3/\Sigma$$

for

$$I_3/I_4 > 1: PPE = 100\, (I_8 - 6I_4)/\Sigma$$

$$EPE = 100\, I_7/\Sigma$$

$$EBE = 100\, I_1/\Sigma$$

$$EHE = 100\, I_6/\Sigma$$

$$EOE = 100\, (I_2 - I_6)/\Sigma$$

$$XEX = 100\, I_{13}/\Sigma$$

$$XEE = 100\, (I_{12} - I_2)/\Sigma$$

$$EEE = 100\, (0.5\, (I_{10} - I_2) + 0.25\, (I_9 + I_8))/\Sigma$$

Where: $\Sigma = I_{11} + (I_3$ or $(I_8 - 6I_4)) + I_7 + I_1 + I_6 + I_2 - I_6 + I_{13} + I_{12} - I_2 + 0.5\, (I_{10} - I_2) + 0.25\, (I_9 + I_8)$ and $I_n$ are the areas of the corresponding carbon following the numbering scheme reported in Table 1 and X can be propylene, 1-butene , 1-hexene or 1-octene

The molar content of Ethylene, Propylene, 1-Butene and 1-Octene is obtained from triads using the following

relations:

$$P \ (m\%) = PPP + PPE + EPE$$

$$B \ (m\%) = EBE$$

$$H \ (m\%) = EHE$$

$$O \ (m\%) = EOE$$

$$E \ (m\%) = EEE + XEE + XEX$$

Molar content was transformed in weight using monomers molecular weight.

**Evaluation of 1H NMR spectrum**

The molar content of Polyethylene terephthalate (PET), Polystyrene (PS) and ethylene/propylene/1-butene/1-hexene/1-octene copolymers were obtained from $^1$H spectra. The aromatic hydrogen peaks of PET and PS (assignments according to Table 2) were used, while the amount of ethylene/propylene/1-Butene/1-Hexene/1-Octene copolymers was determined by the integral of all the aliphatic hydrogens, from which the contribution of the 3 aliphatic hydrogens of the polystyrene was subtracted.

Molar amounts of PET, PS and E/P/B/H/O copolymers were evaluated from the following relations:

$$PET = 100 \ 0.25 \ I_a / \Sigma$$

$$PS = 100 \ 0.5 \ I_c / \Sigma$$

$$\text{Total aliphatic E/P/B/H/O copolymers} = 100 \ 0.5 \ (I_e - 3PS - 9I_d)/\Sigma$$

Where $\Sigma = 0.25 \ I_a + 0.5 \ I_c + 0.5 \ (I_d - 3PS - 100 \ 0.5 \ (I_e - 3PS - 9I_d)/\Sigma$

Molar content was transformed in weight percentage using monomers molecular weight considering the MW of $CH_2$ to estimate the weight contribution from ethylene/propylene/1-butene/1-hexene/1-octene copolymers.

The weight content of P, E, B, H and O obtained from $^{13}$C spectrum was rescaled to obtain the weight percentage in the whole sample by multiplying each value (wt%) from triads with the rescaling factor "RF":

RF = [100-PET(wt%)-PS(wt%)]/100 where PET(wt%) and PS(wt%) are the compositions obtained from $^1$H spectrum.

**Table a Assignments of the $^{13}$C NMR spectrum of Ethylene/Propylene/1-Octene/1-Butene copolymers**

| Number | Chemical Shift (ppm) | Carbon | Sequence |
|--------|---------------------|--------|----------|
| 1 | 39.6 | $T_{\delta\delta}$ | EBE |
| 2 | 38.8 | $T_{\delta\delta}$ | EOE + EHE |
| 3 | 38.2 - 37.6 | $S_{\alpha\gamma}$ | PE |
| 4 | 36.2 | $CH_2$ | AO1010 |
| 6 | 34.0 | $4B_4$ | EHE |
| 7 | 33.3 - 33.2 | $T_{\delta\delta}$ | EPE |
| 8 | 30.8 - 30.7 | $T_{\beta\delta}$ | PPE |
| 8 | 30.3 | $S_{\gamma\delta}$ | XEEE |
| 9 | 30.2 | $S_{\gamma\delta}$ | PEEE |
| 10 | 29.9 | $S_{\delta\delta} + 4B_6$ | EEE + O |

(continued)

| Number | Chemical Shift (ppm) | Carbon | Sequence |
|--------|---------------------|--------|----------|
| 11 | 28.8 - 28.2 | $T_{\beta\beta}$ | PPP |
| 12 | 27.4 - 26.7 | $S_{\beta\delta} + 5B_6$ | XE + O |
| 13 | 24.7 - 24.1 | $S_{\beta\beta}$ | XEX |

**Table b Assignments of the $^1$H NMR spectrum of Ethylene/Propylene/1-Butene/1-Hexene/1-Octene copolymers containing PS and PET**

| Number | Chemical Shift (ppm) | Proton | Sequence |
|--------|---------------------|--------|----------|
| a | 8.08 | CH | PET |
| b | 7.20 - 6.81 | CH | PS |
| c | 6.81 - 6.33 | CH | PS |
| d | 2.91 | $CH_2$ | AO1010 |
| e | 1.80 - 0.70 | $CH + CH_{2+} CH3$ | Total aliphatic |
|   | 1.25 | $CH + CH_2$ | PS |

**Ethylene (C2) content**

**$^{13}$C NMR of propylene/ethylene copolymers components B) and C)**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

E% mol = 100 * [PEP+PEE+EEE] The weight percentage of ethylene content was evaluated using the following equation:

$$E\%\ wt. = \frac{100 * E\%\ mol * MW_E}{E\%\ mol * MW_{E+} P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

## Samples for the mechanical tests

Samples have been obtained according to ISO 1873-2:2007.

**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,
**Melting point and crystallization point**

The melting point has been measured by using a DSC instrument according to ISO 11357-3, at scanning rate of 20C/min both in cooling and heating, on a sample of weight between 5 and 7 mg., under inert $N_2$ flow. Instrument calibration made with Indium.
**Density**, measured according to ISO 1183-1

EXAMPLES

**Example 1**

**Component A)**

Component A is recycled polymer grade from raffia bags The properties of the polymer are reported on table 1.

Table 1

| Component A | | A |
|---|---|---|
| MFR 2.16 Kg/230°C | g/10min | 7,77 |
| Density | kg/dm3 | 0,9465 |
| XS | % | 4,40 |
| Tm | °C | 160.2; 123.1 |
| Tc | °C | 118.4; 110.5 |
| Hc | J/g | -94.1 |
| Hm | J/g | 83.4 |
| C2 (NMR) | wt% | 4.8 |
| C3 (NMR) | wt% | >88.0 |
| C4 (NMR) | wt% | 0.2 |
| C6 (NMR) | wt% | 0.1 |
| C8 (NMR) | wt% | 0.2 |
| PET | wt% | 0.4 |
| Aluminum | ppm | 80 |
| Chlorine | ppm | 110 |

(continued)

| Component A | | A |
|---|---|---|
| Magnesium | ppm | 250 |
| Titanium | ppm | 450 |
| Antimonium | ppm | - |
| Barium | ppm | - |
| Bromium | ppm | - |
| Chromium | ppm | - |
| Calcium | ppm | 15000 |
| Iron | ppm | - |
| Fluorine | ppm | - |
| Lead | ppm | 10 |
| Phosphorus | ppm | 50 |
| Potassium | ppm | 30 |
| Copper | ppm | 10 |
| Silicium | ppm | 210 |
| Sodium | ppm | 100 |
| Zinc | ppm | 25 |
| Zirconium | ppm | <10 |
| Sulfur | ppm | 40 |
| Ashes (800°C) before antiacid treatment | ppm | 35313 |
| C- emission VDA277 | $\mu$g/gr | 7,3 |
| Corrosivity (280°C) | | 0 |
| Mechanical Properties | | |
| Tensile Modulus | N/mm$^2$ | 1560 |
| Charpy Impact @ 23°C | KJ/m$^2$ | 3,8 |
| Charpy Impact @ 0°C | KJ/m$^2$ | 2 |
| Charpy Impact @ -20°C | KJ/m$^2$ | - |
| Stress @ yield | N/mm$^2$ | 32 |
| Elongation @ yield | % | 10 |
| Stress @ break | N/mm$^2$ | 18 |
| Elongation @ break | % | 65 |
| D/B TT | °C | >23 |

**Component B)**

Component B is a propylene homopolymer Moplen HP556E sold by LyondellBasell, it can be synthesized according to the procedure known in the art, Moplen HP556E has the property set forth in table 2.

Table 2

| Variable Name | Units | HP556E |
|---|---|---|
| MFR 2.16 Kg/230°C | g/10min | 0.8 |
| Tm | deg_C | 163.9 |

(continued)

| Variable Name | Units | HP556E |
|---|---|---|
| Tc | deg_C | 106.2 |
| Hc | J/g | -92.8 |
| Hm | J/g | 96.2 |
| Charpy Impact @ 23°C | KJ/m$^2$ | 16.1 |
| Charpy Impact @ 0°C | KJ/m$^2$ | 3.0 |
| Tensile Modulus | N/mm$^2$ | 1450 |
| Stress at yield | N/mm$^2$ | 26.0 |
| Elongation at yield | % | 11.1 |
| Stress at break | N/mm$^2$ | 24.8 |
| Elongation at break | % | 590 |

**Component C)**

Component C is a commercial grade Adflex Q100F sold by LyondellBasell, it can be synthesized according to the procedure known in the art, Adflex Q100F has the property set forth in table 3.

Table 3

| | | |
|---|---|---|
| component c1) | | |
| XS | wt% | <6.5 |
| C2 content | wt% | 3.2 |
| MFR 230°C/2.16 kg | g/10 min | 25.0 |
| split | wt% | 32 |
| component c2) | | |
| C2 content | wt% | 27.0 |
| split | wt% | 68 |
| total composition | | |
| MFR 230°C/5 kg | g/10 min | 0.6 |
| XS | wt% | 64 |
| IV on XS | dl/g | 3.2 |
| XS fraction soluble in xylene at 25°C C2 ethylene derived units IV intrinsic viscosity | | |

Components A), B) and C) have been blended in an extruder (Berstorff extruder). The polymer particles are extruded under nitrogen atmosphere in a twin screw extruder, at a rotation speed of 250 rpm and a melt temperature of 200-250° C. The composition is reported in table 4 and the characterization of the obtained composition is reported in table 5.

Table 4

| Ex | 1 |
|---|---|
| Component A wt% | 48 |
| Component B) wt% | 28 |

(continued)

| Ex | 1 |
|---|---|
| Component C) wt% | 20 |

Table5

| | unit | EX 1 |
|---|---|---|
| Melt Flow Rate | g/10min | 2.42 |
| Charpy 23°C | KJ/ m$^2$ | 15.6 |
| Charpy 0°C | KJ/ m$^2$ | 4.9 |
| Tensile Modulus | N/mm$^2$ | 1100 |
| Stress at yield | N/mm$^2$ | 24.9 |
| Elongation at yield | % | 12.4 |
| Stress at break | N/ mm$^2$ | 18.6 |
| Elongation at break | % | 330 |
| Hc | J/g | -76.3 |
| Hm | J/g | 66.6 |
| Tm | °C | 159.9 |
| Tc | °C | 117.3 |
| HDT 0.45 Mpa | °C | 81.5 |

## Claims

1. A recycled polyolefin composition comprising:

    A) from 40 wt% to 65 wt%; wt% of a recycled polypropylene composition;
    B) from 20 wt% to 40 wt% of a propylene homopolymer , having:

        - a fraction soluble in xylene at 25°C lower than 4.0 wt%;
        - a Melt Flow Rate (ISO 1133 230°C/5.0 kg) ranging from 0.1 to 3.3 g/10min;

            - Tensile modulus, measured according to ISO 527-2, ranging from 1100N/mm$^2$ to 1900 N/mm$^2$;
            - Charpy impact test at 23°C, determined according to ISO 179-1eA, and ISO 1873-2, ranging from 5.2 KJ/m$^2$ to 25.0 KJ/m$^2$;

        - Elongation at break: measured according To ISO 527 ranging from 350 % to 860%;

    C) from 14 wt% to 28 wt%; of a second polypropylene ethylene copolymercomprising:

        - (c1) from 21 wt% to 43 wt%, of a propylene ethylene copolymer, having:

            - units derived from ethylene, measured according to $^{13}$C-NMR, in an amount ranging from 1.7 wt% to 4.5 wt%;
            - a fraction soluble in xylene at 25°C lower than 8.0 wt%; preferably being higher than 0.5 wt% and
            - a Melt Flow Rate (ISO 1133 230°C/5.0 kg) ranging from 18.0 to 34.0 g/10min;

        - (c2) from 57 wt% to 79 wt%; of a copolymer of propylene and ethylene having:

            - units derived from ethylene, measured according to $^{13}$C-NMR, in an amount ranging from 18.0 wt% to 36.0 wt%;

said polypropylene composition (c) being further **characterized by**:

- a Melt Flow Rate (ISO 1133 230°C/5.0 kg) ranging from 0.2 to 1.7 g/10 min;
- an amount of fraction soluble in xylene at 25°C ranging from 52.0 wt% to 76.0 wt%;
- intrinsic viscosity fraction soluble in xylene at 25°C, measured in tetrahydronaphthalene at 135 °C, ranging from 2.1 to 4.7 dl/g; and,

in the said composition the sum of c1) and c2), being referred to the total weight of c1) and c2), is 100, the sum of the amounts of (A), (B) and (C) being referred to the total weight of (A), (B) and (C) is 100;

the recycled polypropylene composition (A) has:

Ethylene derived units content, measured with $^{13}$C-NMR, ranging from 2.50 wt% to 7.30 wt%;
Butene derived units content, measured with $^{13}$C-NMR, ranging from 0.05 wt% to 0.30 wt%;
Hexene derived units content, measured with $^{13}$C-NMR, ranging from 0.03 wt% to 0.23 wt%;
Octene derived units content, measured with $^{13}$C-NMR, ranging from 0.02 wt% to 0.50 wt%;
Polyethylene terephthalate content, measured with $^{13}$C-NMR, ranging from 0.05 wt% to 0.8 wt%
Propylene derived units content, measured with $^{13}$C-NMR, higher than 87.4 wt%
Density, ISO 1183-1, ranging from 0.9400 Kg/dm$^3$ to 0.9500 Kg/dm$^3$;
Melt Flow Rate (ISO 1133 230°C/2.16 kg) ranging from 1.2 to 20.3 g/10min.

2. The recycled polyolefin composition according to claim 1 wherein the component (A) ranges from 42 wt% to 60 wt% component (B) ranges from 22 wt% to 38 wt%; and component C) ranges from 15 wt% to 26 wt%;

3. The recycled polyolefin composition according to claims 1 or 2 wherein in component B) the Melt Flow Rate (ISO 1133 230°C/5.0 kg) ranges from from 0.3 to 2.9 g/10min.

4. The recycled polyolefin composition according to any of the preceding claims wherein in component C) component c1) ranges from 23 wt% to 41 wt%; and component c2) ranges from 59 wt% to 77 wt%;

5. The recycled polyolefin composition according to any of the preceding claims wherein in component c1) the units derived from ethylene, measured according to $^{13}$C-NMR, in an amount ranges from 2.0 wt% to 4.3 wt%.

6. The recycled polyolefin composition according to any of the preceding claims wherein in component B) the tensile modulus, measured according to ISO 527-2, ranges from 1200 N/mm$^2$ to 1780 N/mm$^2$.

7. The recycled polyolefin composition according to any of the preceding claims wherein component (C) has the amount of fraction soluble in xylene at 25°C ranging from 54.0 wt% to 74.0 wt%.

8. The recycled polyolefin composition according to any of the preceding claims wherein in component (B) the Charpy impact test at 23°C, determined according to ISO 179-1eA, and ISO 1873-2, ranges from 8.1 KJ/m$^2$ to 22.2 KJ/m$^2$.

9. The recycled polyolefin composition according to any of the preceding claims wherein component (C) has the intrinsic viscosity fraction soluble in xylene at 25°C, measured in tetrahydronaphthalene at 135 °C, ranging from 2.4 to 4.3 dl/g.

10. The recycled polyolefin composition according to a to any of the preceding claims wherein in component A) the melt flow rate (ISO 1133-1 230°C/2.16 kg) ranges from 3.4 to 17.4 g/10min.

11. The recycled polyolefin composition according to any of the preceding claims wherein in component (B the Elongation at break: measured according To ISO 527 ranges from 430% to 710 %.

12. The recycled polyolefin composition according to any of the preceding claims wherein in component (C) the tensile modulus, measured according to ISO 527-2, ranges from 1020 N/mm$^2$ to 1630 N/mm$^2$.

13. The recycled polyolefin composition according to any of the preceding claims wherein in component (C) the Melt Flow Rate (ISO 1133 230°C/5.0 kg) ranges from 0.3 to 1.4 g/10min.

14. The recycled polyolefin composition according to any of the preceding claims wherein component A) has the Density, ISO 1183-1, ranging from 0.9423 Kg/dm$^3$ to 0.9484 Kg/dm$^3$.

15. A blow molded article obtained from the recycled polyolefin composition according to any of the preceding claims.

## EUROPEAN SEARCH REPORT

**Application Number**

EP 24 17 1421

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/258578 A1 (BOREALIS AG [AT]) 15 December 2022 (2022-12-15) * example 3 * | 1-15 | INV. C08L23/12 C08L23/14 C08L23/10 |
| X | US 2023/193007 A1 (WANG JINGBO [AT] ET AL) 22 June 2023 (2023-06-22) * example 2 * | 1-15 | |
| A | WO 2023/117728 A1 (SABIC GLOBAL TECHNOLOGIES BV [NL]) 29 June 2023 (2023-06-29) * example 3 * | 1-15 | |
| A | US 2024/059883 A1 (KAHLEN SUSANNE MARGARETE [AT] ET AL) 22 February 2024 (2024-02-22) * examples 5,7 * | 1-15 | |
| A | US 2018/215846 A1 (KULSHRESHTHA BHAWNA [AT] ET AL) 2 August 2018 (2018-08-02) * example 3 * | 1-15 | **TECHNICAL FIELDS SEARCHED (IPC)** |
| A | STOIAN SERGIU ALEXANDRU ET AL: "Recycled polypropylene with improved thermal stability and melt processability", JOURNAL OF THERMAL ANALYSIS AND CALORIMETRY, KLUWER, DORDRECHT, NL, vol. 138, no. 4, 21 September 2019 (2019-09-21), pages 2469-2480, XP036947534, ISSN: 1388-6150, DOI: 10.1007/S10973-019-08824-2 [retrieved on 2019-09-21] * table 6, page 2479 left column first paragrah "conclusion" * | 1-15 | C08L |

The present search report has been drawn up for all claims

| Place of search | Date of completion of the search | Examiner |
|---|---|---|
| Munich | 18 October 2024 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1421

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2024

| Patent document cited in search report | Publication date | Patent family member(s) | | Publication date |
|---|---|---|---|---|
| WO 2022258578 A1 | 15-12-2022 | BR | 112023025572 A2 | 20-02-2024 |
| | | CN | 117460775 A | 26-01-2024 |
| | | EP | 4101890 A1 | 14-12-2022 |
| | | JP | 2024520765 A | 24-05-2024 |
| | | KR | 20240010083 A | 23-01-2024 |
| | | US | 2024262997 A1 | 08-08-2024 |
| | | WO | 2022258578 A1 | 15-12-2022 |
| US 2023193007 A1 | 22-06-2023 | BR | 112021021480 A2 | 04-01-2022 |
| | | CA | 3138712 A1 | 05-11-2020 |
| | | CN | 113767116 A | 07-12-2021 |
| | | EP | 3733720 A1 | 04-11-2020 |
| | | KR | 20220002568 A | 06-01-2022 |
| | | US | 2023193007 A1 | 22-06-2023 |
| | | WO | 2020221739 A1 | 05-11-2020 |
| WO 2023117728 A1 | 29-06-2023 | CN | 118647658 A | 13-09-2024 |
| | | EP | 4453075 A1 | 30-10-2024 |
| | | WO | 2023117728 A1 | 29-06-2023 |
| US 2024059883 A1 | 22-02-2024 | CA | 3209832 A1 | 04-08-2022 |
| | | CN | 116745358 A | 12-09-2023 |
| | | EP | 4284873 A1 | 06-12-2023 |
| | | JP | 2024505829 A | 08-02-2024 |
| | | KR | 20230132572 A | 15-09-2023 |
| | | US | 2024059883 A1 | 22-02-2024 |
| | | WO | 2022162042 A1 | 04-08-2022 |
| US 2018215846 A1 | 02-08-2018 | BR | 112018005269 A2 | 09-10-2018 |
| | | CN | 108025826 A | 11-05-2018 |
| | | EP | 3165473 A1 | 10-05-2017 |
| | | ES | 2663149 T3 | 11-04-2018 |
| | | JP | 6472576 B2 | 20-02-2019 |
| | | JP | 2018532859 A | 08-11-2018 |
| | | KR | 20180066257 A | 18-06-2018 |
| | | TW | 201723060 A | 01-07-2017 |
| | | US | 2018215846 A1 | 02-08-2018 |
| | | WO | 2017076933 A1 | 11-05-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5030662 A
- WO 2007071494 A
- US 4522930 A
- EP 045977 A2
- WO 0063261 A
- WO 0157099 A
- US 4399054 A
- US 4469648 A

**Non-patent literature cited in the description**

- **HUGGINS, M.L.** *J. Am. Chem. Soc.*, 1942, vol. 64, 2716
- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethylaluminum chloride. *Macromolecules*, 1982, vol. 15 (4), 1150-1152
- **C.J. CARMAN** ; **R.A. HARRINGTON** ; **C.E. WILKES**. *Macromolecules*, 1977, vol. 10, 536